# EUROPEAN PATENT APPLICATION

(11) **EP 4 804 063 A1**
(43) Date of publication of application: **09.09.2026**
(21) Application number: 24885360.8
(22) Date of filing: 03.10.2024
(51) Int. Cl.: G06F 21/55, B60R 16/02, G06F 11/34

(54) **VEHICLE SECURITY ANALYSIS SYSTEM, VEHICLE SECURITY ANALYSIS METHOD, AND PROGRAM**

(30) Priority: 31.10.2023 JP 2023186504
(71) Applicant: NTT Security (Japan) KK, Tokyo 101-0021 (JP)
(72) Inventor: CHIBA, Yasunobu, Tokyo 101-0021 (JP); NAKAMURA, Manabu, Tokyo 101-0021 (JP); UENO, Wataru, Tokyo 101-0021 (JP); TANAKA, Masashi, Tokyo 101-0021 (JP); NAKATA, Kensuke, Tokyo 101-0021 (JP)
(74) Representative: Murgitroyd & Company
(86) International application number: PCT/JP2024/035466
(87) International publication number: WO 2025/094585

(57) **Abstract**

A vehicle security analysis system includes an acquisition unit configured to acquire sensor log data relating to an in-vehicle device mounted on a vehicle; a determination unit configured to, based on state information indicating a state of the vehicle, determine whether or not the sensor log data acquired by the acquisition unit is sensor log data having occurred based on an event not caused by a cyber attack; an analysis unit configured to analyze the sensor log data acquired by the acquisition unit while excluding the sensor log data having occurred based on the event not caused by the cyber attack; and an output unit configured to output an analysis result obtained by the analysis unit.

## Description

### TECHNICAL FIELD

The present invention relates to a vehicle security analysis system, a vehicle security analysis method, and a program.

### BACKGROUND ART

In order to detect a cyber attack or the like on a vehicle, such as an automobile or the like, there is a vehicle security analysis system configured to acquire and analyze sensor log data relating to an in-vehicle device mounted on the vehicle.

Also, an analysis device configured to determine whether or not to output an abnormality notice indicating abnormality based on: a determination result obtained by determining whether or not abnormality of a monitoring target device has occurred based on a monitoring result of the monitoring target device; and a code verification result of the monitoring target device, is known (see, for example, Patent Document 1).

### RELATED ART DOCUMENTS

### PATENT DOCUMENTS

Patent Document 1: Japanese Patent Application Publication No. 2022-138009

### SUMMARY OF THE INVENTION

### PROBLEMS TO BE SOLVED BY THE INVENTION

In a security sensor mounted on a vehicle in order to detect a cyber attack, an erroneous detection (false positive), in which an event not caused by a cyber attack is erroneously detected as a cyber attack, may occur. When sensor log data having occurred based on such an erroneous detection is transmitted to a vehicle security analysis system, there is a problem in analysis processing in the vehicle security analysis system, such as occurrence of meaningless analysis processing, reduction in attack detection accuracy, or the like.

The technique disclosed in Patent Document 1 can reduce the occurrence of an erroneous detection. However, in the conventional techniques, when an erroneous detection occurs, there is a problem that a vehicle security analysis system cannot determine that erroneously detected sensor log data is an erroneous detection.

An embodiment of the present invention has been made in view of the above problem, and, in a vehicle security analysis system configured to acquire and analyze sensor log data relating to in-vehicle devices mounted on vehicles, it is possible to determine that erroneously detected sensor log data is an erroneous detection.

### MEANS FOR SOLVING THE PROBLEMS

In order to solve the above problem, a vehicle security analysis system according to an embodiment of the present invention includes: an acquisition unit configured to acquire sensor log data relating to an in-vehicle device mounted on a vehicle; a determination unit configured to, based on state information indicating a state of the vehicle, determine whether or not the sensor log data acquired by the acquisition unit is sensor log data having occurred based on an event not caused by a cyber attack; an analysis unit configured to analyze the sensor log data acquired by the acquisition unit while excluding the sensor log data having occurred based on the event not caused by the cyber attack; and an output unit configured to output an analysis result obtained by the analysis unit.

### ADVANTAGEOUS EFFECTS OF THE INVENTION

According to an embodiment of the present invention, in a vehicle security analysis system configured to acquire and analyze sensor log data relating to an in-vehicle device mounted on a vehicle, it is possible to determine that erroneously detected sensor log data is an erroneous detection.

### BRIEF DESCRIPTION OF THE DRAWINGS

[FIG. 1] FIG. 1 is a diagram illustrating an example of a configuration of a vehicle security analysis system according to the present embodiment.
[FIG. 2] FIG. 2 is a diagram for explaining an example of analysis processing according to the present embodiment.
[FIG. 3] FIG. 3 is a diagram illustrating an example of a hardware configuration of a computer according to the present embodiment.
[FIG. 4] FIG. 4 is a diagram illustrating an example of a functional configuration of a SOC server according to the present embodiment.
[FIG. 5] FIG. 5 is a diagram illustrating an image of an example of log data according to the present embodiment.
[FIG. 6] FIG. 6 is a diagram illustrating an image of an example of an analysis logic DB according to the present embodiment.
[FIG. 7] FIG. 7 is a diagram illustrating an image of an example of state information according to a first embodiment.
[FIG. 8] FIG. 8 is a flowchart illustrating an example of processing of a SOC server according to the first embodiment.
[FIG. 9] FIG. 9 is a flowchart illustrating an example of processing for specifying or estimating a state of a vehicle according to the first embodiment.
[FIG. 10] FIG. 10 is a flowchart illustrating an example of determination processing according to the first embodiment.
[FIG. 11] FIG. 11 is a flowchart illustrating an example of analysis processing according to the first embodiment.
[FIG. 12] FIG. 12 is a diagram illustrating an image of an example of state information according to a second embodiment.
[FIG. 13] FIG. 13 is a flowchart illustrating an example of management processing of the state information according to the second embodiment.
[FIG. 14] FIG. 14 is a flowchart illustrating an example of determination processing according to the second embodiment.
[FIG. 15] FIG. 15 is a diagram illustrating another example of the state information and a determination method according to the present embodiment.
[FIG. 16] FIG. 16 is a flowchart illustrating an example of determination processing according to a third embodiment.

### DETAILED DESCRIPTION OF THE INVENTION

Hereinafter, embodiments of the present invention (the present embodiments) will be described with reference to the drawings. Note that the embodiments described below are merely examples, and embodiments to which the present invention is applied are not limited to the following embodiments.

### <System Configuration>

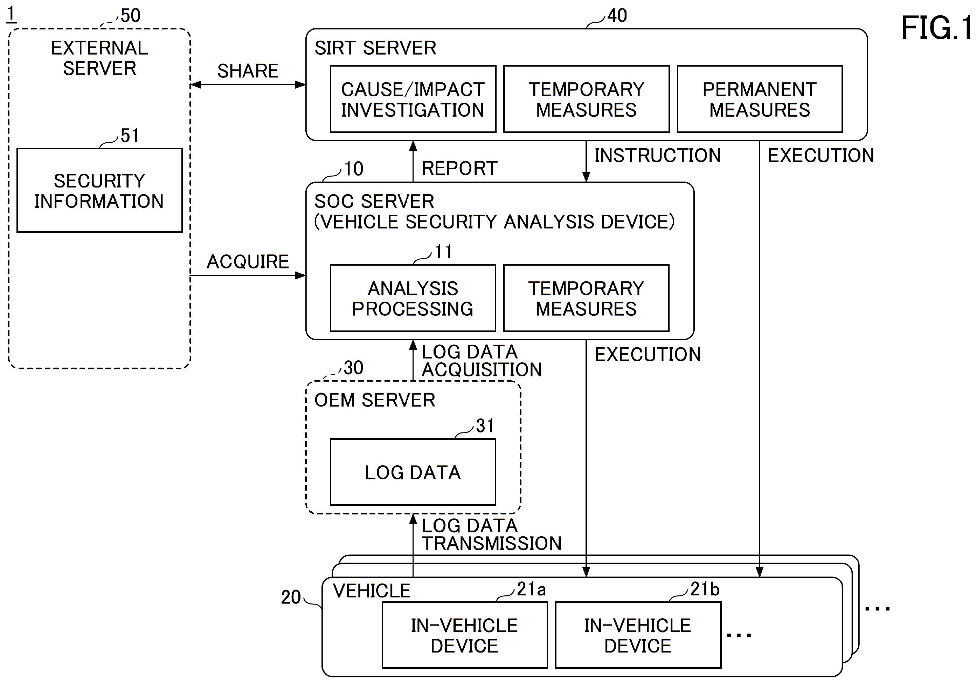

FIG. 1 is a diagram illustrating an example of a configuration of a vehicle security analysis system according to the present embodiment. A vehicle security analysis system 1 includes, for example, a SOC (Security Operation Center) server 10 and a SIRT (Security Incident Response Team) server 40, which can communicate with each other via a communication network.

The SOC server (vehicle security analysis device) 10 is, for example, an information processing device having a configuration of a computer, or a system including a plurality of computers. The SOC server 10 is an example of a vehicle security analysis device configured to acquire and analyze sensor log data relating to in-vehicle devices 21a, 21b, ... mounted on a vehicle 20 in order to detect a cyber attack (hereinafter referred to simply as an "attack") on the vehicle 20, such as an automobile or the like. In the following description, an "in-vehicle device 21" is used to indicate a given in-vehicle device among the in-vehicle devices 21a, 21b, ..., etc.

The SOC server 10 is configured to execute analysis processing 11 on the acquired sensor log data (hereinafter referred to simply as "log data"), and is configured to, when an attack on the vehicle 20 is detected, transmit a report including information on the detected attack to the SIRT server 40 or the like.

In the example of FIG. 1, the SOC server 10 acquires log data relating to the in-vehicle device 21 mounted on the vehicle 20 from an OEM (Original Equipment Manufacturing) server 30 or the like, which is configured to collect log data 31 from one or more vehicles 20. However, this is by no means a limitation. The SOC server 10 may acquire log data relating to the in-vehicle device 21 mounted on the vehicle 20 from one or more vehicles 20 without the OEM server 30.

Also, the SOC server 10 can acquire security information 51 via a communication network, such as the Internet or the like, from an external server 50 operated, for example, by Auto-ISAC (Automotive Information Sharing and Analysis Center). This security information 51 includes, for example, various cybersecurity information, such as, for example, cyberthreats and potential vulnerabilities relating to connected cars. The SOC server 10 may detect an attack on the vehicle 20 based on the acquired log data 31 and security information 51.

Also, the SOC server 10 may have a function of executing a temporary measure to the vehicle 20, for example, based on the acquired security information 51 or an instruction from the SIRT server 40 when an attack on the vehicle 20 is detected.

The SIRT server 40 is an information processing device having a configuration of a computer, or a system including a plurality of computers. The SIRT server 40 is, for example, a server operated by an organization (SIRT) that performs security responses to external threats that can threaten the safety of products manufactured and sold by vehicle manufacturers, in-vehicle device manufacturers, or the like, in order to ensure the safety of their products. The SIRT is also referred to as a PSIRT (Product Security Incident Response Team) or a CSIRT (Computer Security Incident Response Team).

The SIRT server 40 has a function of performing a permanent measure including a response policy to the vehicle 20, for example, when the response policy or the like determined for each manufacturer is input based on a report transmitted from the SOC server 10. Also, the SIRT server 40 may have a function of sharing the security information 51 with the external server 50 and instructing the SOC server 10 or the vehicle 20 to perform a temporary measure to the vehicle 20 based on the security information 51.

### (Example of Analysis Processing)

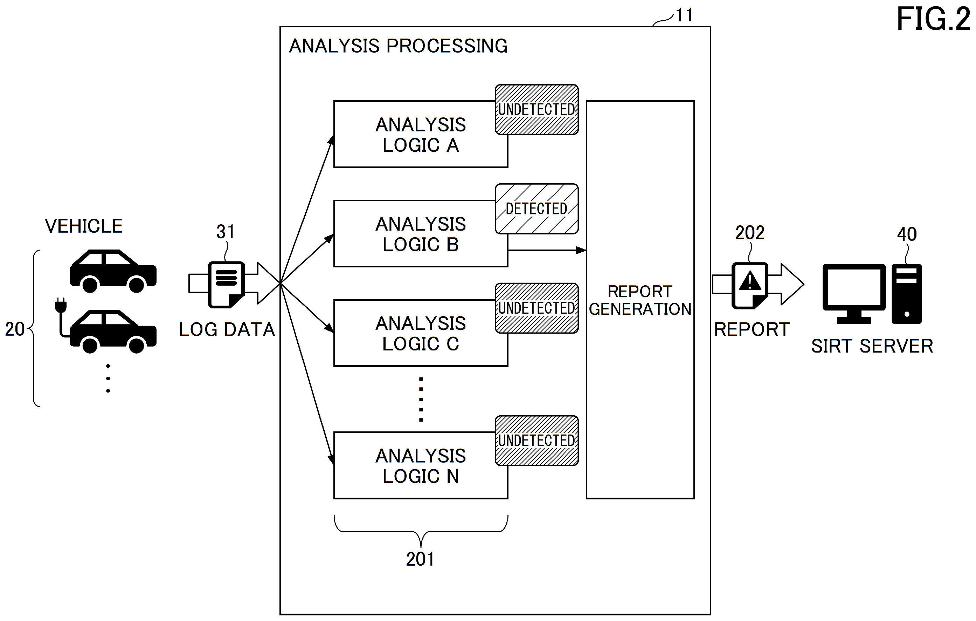

FIG. 2 is a diagram for explaining an example of analysis processing according to the present embodiment. The SOC server 10 executes, for example, analysis processing 11 of executing a plurality of analysis logics 201 on the log data 31 relating to the in-vehicle device 21 mounted on the vehicle 20.

The plurality of analysis logics 201 are described for each attack to be detected. For example, when an attack is detected by an analysis logic B among the plurality of analysis logics 201 through the analysis processing 11, the SOC server 10 can identify the detected attack based on description contents of the analysis logic B. Preferably, the SOC server 10 generates a report 202 including information of the detected attack, and outputs the generated report 202 to a predetermined output destination, such as the SIRT server 40 or the like.

Note that the log data 31 acquired by the SOC server 10 may include false positive log data due to erroneous detection in which an event not caused by a cyber attack is erroneously detected as a cyber attack. Here, a false positive means that a normal state, action, operation, or the like is erroneously detected to be abnormal in security threat detection.

When the false positive log data 31 is input, the SOC server 10 executes the plurality of analysis logics 201 even though no attack has occurred. This raises a problem with occurrence of meaningless analysis processing and reduction in attack detection accuracy.

The technique disclosed in Patent Document 1 can reduce the occurrence of erroneous detection. However, in the conventional technique, when erroneous detection has occurred, the SOC server 10 cannot determine that the erroneously detected log data 31 is a false positive.

In view of this, the SOC server 10 according to the present embodiment has a function of acquiring log data relating to the in-vehicle device 21 mounted on the vehicle 20 and determining whether or not the acquired log data is a false positive based on state information indicating the state of the vehicle 20. Also, the SOC server 10 executes the analysis processing 11 while excluding the log data 31 determined to be a false positive from the acquired log data 31.

Therefore, according to the vehicle security analysis system 1 according to the present embodiment, it is possible to suppress the meaningless analysis processing 11 due to the false positive log data 31 and to increase attack detection accuracy.

### <Hardware Configuration>

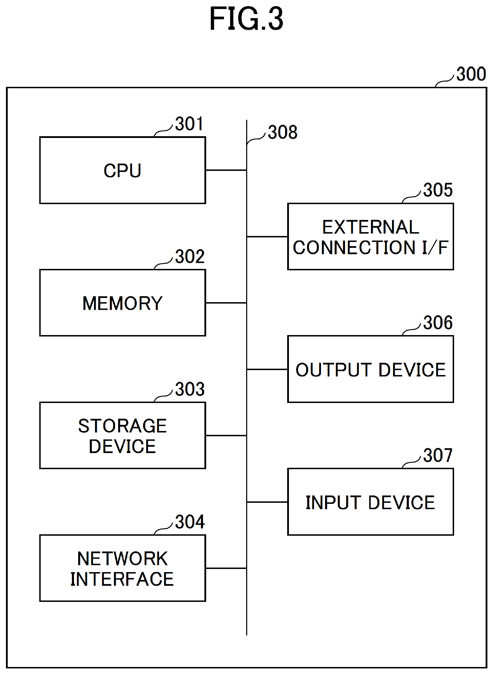

The SOC server 10, the OEM server 30, the SIRT server 40, the external server 50, and the like, described with reference to FIG. 1, have, for example, a hardware configuration of a computer 300 illustrated in FIG. 3. Alternatively, the SOC server 10, the OEM server 30, the SIRT server 40, the external server 50, and the like are configured by a plurality of computers 300.

FIG. 3 is a diagram illustrating an example of the hardware configuration of a computer according to the present embodiment. The computer 300 includes, for example, a CPU (Central Processing Unit) 301, a memory 302, a storage device 303, a network I/F (Interface) 304, an external connection I/F 305, an output device 306, an input device 307, and an internal bus 308.

The CPU 301 is a processor configured to implement various functions by executing a program stored in a storage medium, such as the memory 302, the storage device 303, or the like. The memory 302 includes, for example, a RAM (Random Access Memory), which is a volatile memory used by the CPU 301 as a temporary storage area, and a ROM (Read Only Memory), which is a nonvolatile memory configured to store a program for starting the CPU 301. The storage device 303 is a large-capacity, nonvolatile storage device, such as an SSD (Solid State Drive), an HDD (Hard Disk Drive), or the like. The network I/F 304 includes one or more communication interfaces configured to connect the computer 300 to a communication network.

The external connection I/F 305 is an interface configured to connect an external device to the computer 300. The output device 306 is an output device (e.g., a display, a speaker, or a lamp) configured to perform output to the outside. The input device 307 is an input device (e.g., a keyboard, a mouse, or a microphone) configured to receive an input from the outside. Note that the input device 307 and the output device 306 may be an integrated input/output device (e.g., a touch panel display). The internal bus 308 is connected to each of the above-described components, and configured to transmit an address signal, a data signal, various control signals, and the like.

### <Functional Configuration>

Subsequently, the functional configuration of the vehicle security analysis system 1 according to the present embodiment will be described.

### (Functional Configuration of SOC Server)

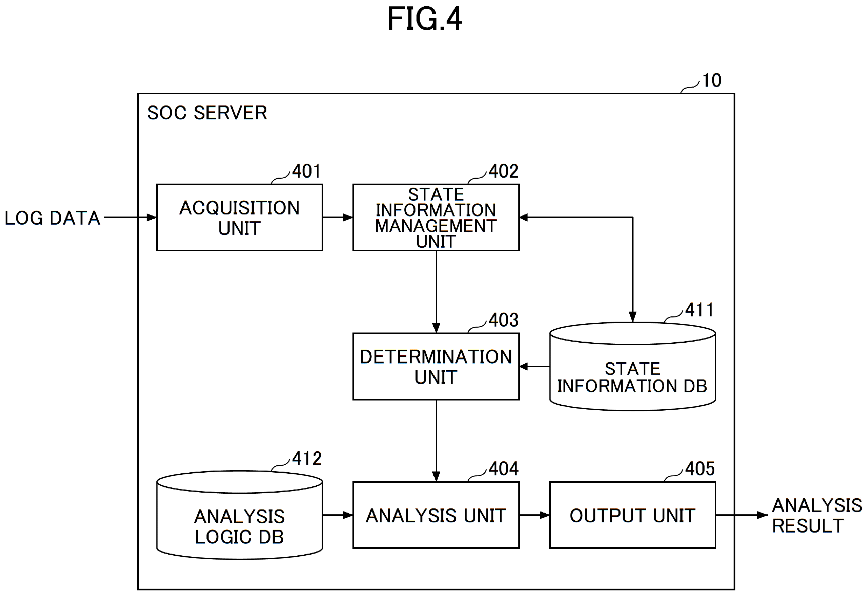

FIG. 4 is a diagram illustrating an example of a functional configuration of a SOC server according to the present embodiment. The SOC server 10 implements, for example, each functional configuration illustrated in FIG. 4 by executing a predetermined program on one or more computers 300 included in the SOC server 10. In the example of FIG. 4, the SOC server 10 includes an acquisition unit 401, a state information management unit 402, a determination unit 403, an analysis unit 404, an output unit 405, and the like. At least part of the above functional configurations may be implemented by hardware.

As an example, the SOC server 10 stores a state information DB (Database) 411, an analysis logic DB 412, and the like in a storage unit, such as the storage device 303 or the like illustrated in FIG. 3. As another example, the SOC server 10 may utilize the state information DB (Database) 411 or the analysis logic DB 412 stored in an external storage server, a cloud storage, or the like.

The acquisition unit 401 is configured to execute acquisition processing of acquiring the log data (sensor log data) 31 relating to the in-vehicle device 21 mounted on the vehicle 20. For example, the acquisition unit 401 acquires the log data 31 from an external server, such as the OEM server 30 or the like, via a communication network. However, this is by no means a limitation. For example, the acquisition unit 401 may acquire the log data 31 from the vehicle 20 via a communication network.

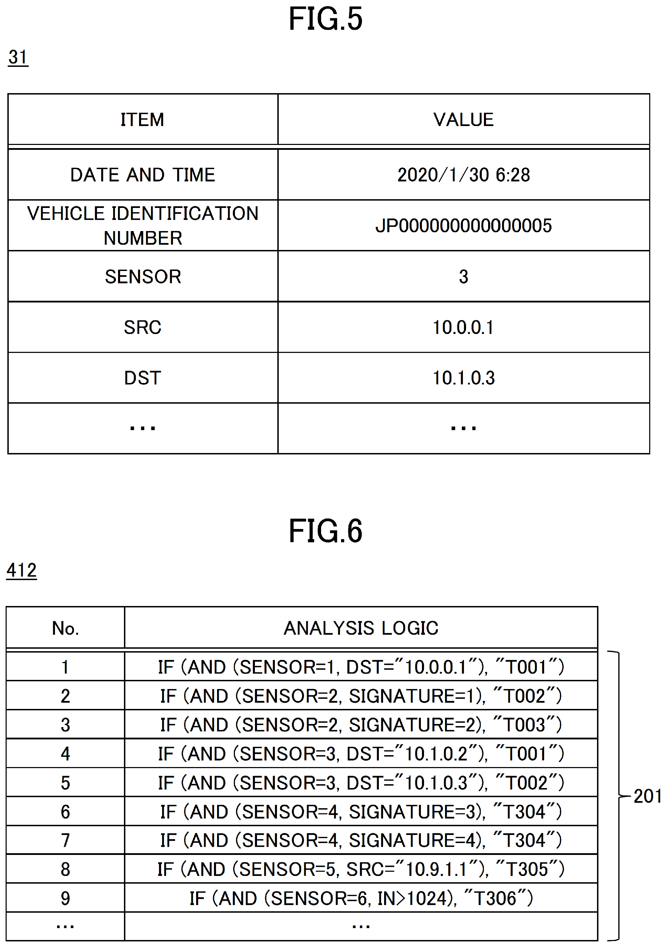

FIG. 5 is a diagram illustrating an example of an image of log data according to the present embodiment. In the example of FIG. 5, the log data 31 includes, as items, information, such as "DATE AND TIME", "VEHICLE IDENTIFICATION NUMBER", "SENSOR", "SRC", "DST", ... etc. The "DATE AND TIME" is, for example, information indicating the date and time when an event causing the log data 31 was detected, the date and time when the log data 31 was generated, or the date and time when the log data 31 was transmitted. The vehicle identification number is identification information, such as a VIN (Vehicle Identification Number) or the like for identifying the vehicle 20.

"SENSOR", "SRC", "DST", ... etc. are examples of data included in the log data 31. The "SENSOR" is identification information (e.g., a sensor ID) for identifying a plurality of in-vehicle devices 21 mounted on the vehicle 20, a security sensor, or the like. The "SRC" is identification information (e.g., IP address) for identifying a transmission source of the communication that caused the generation of the log data 31. The "DST" is identification information (e.g., IP address) for identifying a transmission destination of the communication that caused the generation of the log data 31. Here, with reference to FIG. 4, the description of the functional configuration of the SOC server 10 will be continued.

The state information management unit 402 is configured to execute state information management processing of managing the state information indicating the state of each vehicle 20. For example, the state information management unit 402 estimates or specifies the state of the vehicle 20 from the log data 31 acquired by the acquisition unit 401, and stores and manages the state information indicating the state of the vehicle 20 in the state information DB 411 or the like in association with the vehicle identification number.

Alternatively, the state information management unit 402 may acquire the state of the vehicle 20, for example, from an external vehicle management system configured to manage the state of the vehicle 20, or from the vehicle 20, and manage the state information indicating the state of the vehicle 20. Further, the state information management unit 402 may estimate or specify the state of the vehicle 20 based on information acquired from the external vehicle management system, the vehicle 20, or the like, in addition to the log data 31 acquired by the acquisition unit 401.

The determination unit 403 is configured to, based on the state information indicating the state of the vehicle 20, execute determination processing of determining whether or not the log data 31 acquired by the acquisition unit 401 is the log data 31 having occurred based on an event not caused by a cyber attack. Preferably, the determination unit 403 determines that the log data 31 having occurred based on an event not caused by the cyber attack is a false positive. Note that specific examples of the state information and the determination processing executed by the determination unit 403 will be described below in accordance with a plurality of embodiments.

The analysis unit 404 is configured to execute analysis processing of analyzing the log data 31 acquired by the acquisition unit 401 while excluding the log data 31 having occurred based on an event not caused by a cyber attack (false positive log data 31).

As an example, the analysis unit 404 analyzes the log data 31, determined not to be a false positive by the determination unit 403, by using the analysis logic DB 412 illustrated in FIG. 6.

FIG. 6 is a diagram illustrating an image of an example of the analysis logic DB according to the present embodiment. As illustrated in FIG. 6, the plurality of analysis logics 201 are previously registered in the analysis logic DB 412. The analysis unit 404 analyzes the analysis target log data 31 by executing the plurality of analysis logics 201 on the analysis target log data 31.

As described above, the plurality of analysis logics 201 are described for each attack to be detected. For example, an analysis logic of No. 1 indicates that, when a value of "SENSOR" of the log data 31 is "1" and a value of "DST" is "10.0.0.1", an attack is "T001". Here, the "T001" is identification information (e.g., an attack ID) for identifying an attack.

Also, an analysis logic of No. 2 indicates that, when a value of "SENSOR" of the log data 31 is "2" and a value of "SIGNATURE" is "1", an attack is "T002". Here, the "SIGNATURE" is identification information (e.g., a signature ID) for identifying a signature, which is data used for detecting malware, a specific communication pattern, a specific file, or the like.

The analysis unit 404 executes a plurality of analysis logics 201 on the log data 31 determined to be analyzed by the determination unit 403, and, when an attack is detected, outputs information relating to the detected attack as an analysis result.

The above-described method of analyzing the log data 31 by the analysis unit 404 is an example. In the present embodiment, the method of analyzing the log data 31 by the analysis unit 404 may be any other method.

The output unit 405 executes output processing of outputting the analysis result, obtained by the analysis unit 404, to a predetermined output destination. For example, the output unit 405 transmits the analysis result (e.g., the report 202), obtained by the analysis unit 404, to the SIRT server 40.

Note that the functional configuration of the SOC server 10 illustrated in FIG. 4 is an example. For example, the functional configuration of the SOC server 10 illustrated in FIG. 4 may be distributed to a plurality of devices. In this case, the functional configuration of the SOC server 10 illustrated in FIG. 4 may be included in any of the devices included in the vehicle security analysis system 1.

Also, when the state information managed by the state information management unit 402 is information that does not need to be retained, the SOC server 10 (or the vehicle security analysis system 1) does not necessarily need to include the state information DB 411. Further, the state information management unit 402 may acquire analysis determination information (e.g., the security information 51), not being based on the log data 31, from the external server 50 or the like, and manage the acquired analysis determination information.

### [First Embodiment]

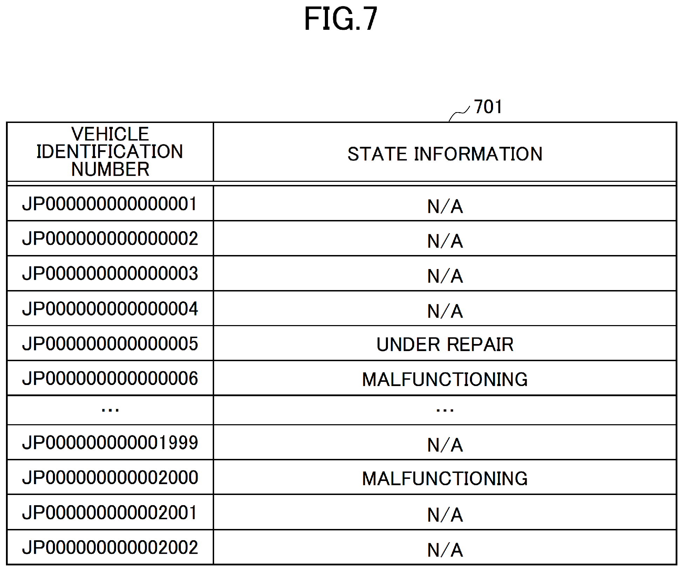

FIG. 7 is a diagram illustrating an image of an example of state information according to a first embodiment. For example, as illustrated in FIG. 7, the state information management unit 402 manages state information 701 indicating the state of each vehicle 20 in association with the vehicle identification numbers of the plurality of vehicles 20. In the example illustrated in FIG. 7, the state of the vehicle 20 having a vehicle identification number of "JP000000000000005" is "UNDER REPAIR", and the states of the vehicles 20 having vehicle numbers of "JP000000000000006" and "JP000000000002000" are "MALFUNCTIONING". "N/A" in the state information indicates that the state of the vehicle 20 is neither "UNDER REPAIR" nor "MALFUNCTIONING".

Note that the state information 701 illustrated in FIG. 7 is an example for description, and various other information indicating the state of the vehicle 20 can be used.

### <Flow of Processing>

Subsequently, a flow of processing of a vehicle security analysis method according to the first embodiment will be described.

### (Processing of SOC Server)

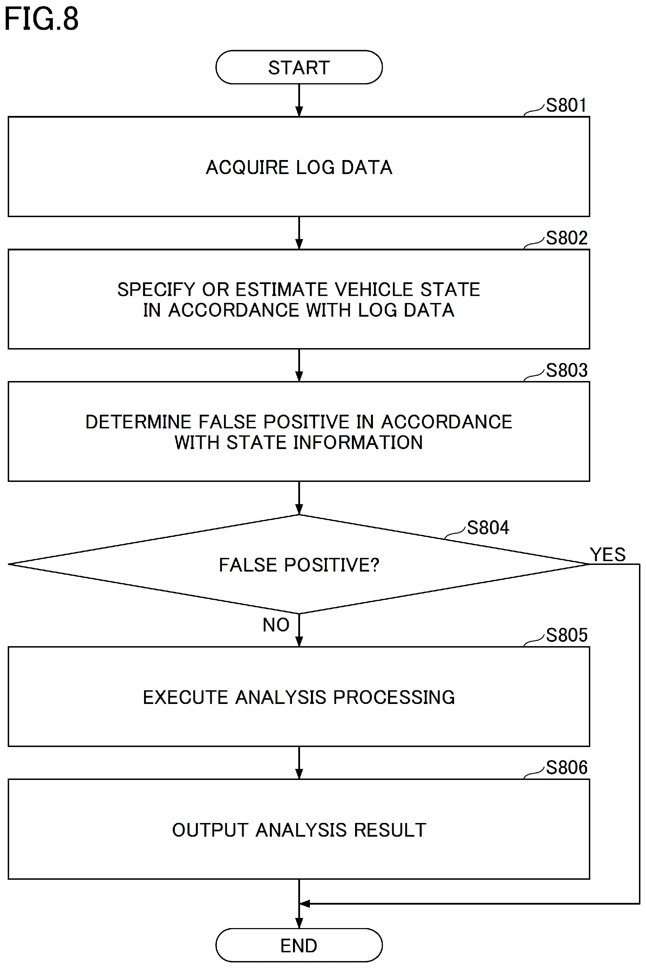

FIG. 8 is a flowchart illustrating an example of processing of the SOC server according to the first embodiment. This processing illustrates, for example, an outline of the processing executed by the SOC server 10, which has the functional configuration illustrated in FIG. 4.

In step S801, the acquisition unit 401 acquires the log data 31 from the OEM server 30 or the like.

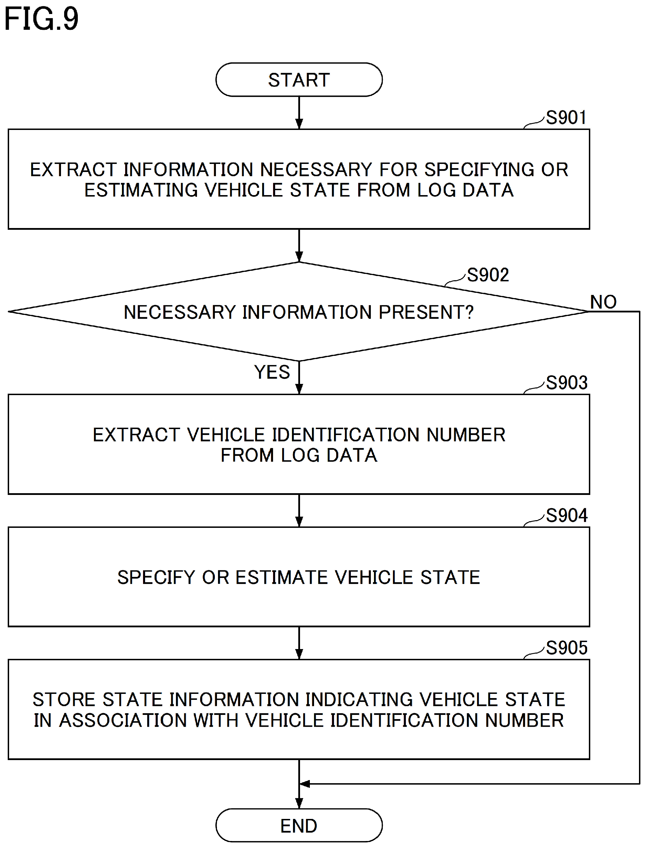

In step S802, the state information management unit 402 estimates or specifies the state of the vehicle 20 corresponding to the log data 31 based on the log data 31 acquired by the acquisition unit 401. For example, the state information management unit 402 executes processing for specifying or estimating the state of the vehicle 20, as illustrated in FIG. 9.

FIG. 9 is a flowchart illustrating an example of processing for specifying or estimating the state of a vehicle according to the first embodiment. This processing illustrates an example of processing executed by the state information management unit 402 in step S802 of FIG. 8.

In step S901, the state information management unit 402 extracts information necessary for specifying or estimating the state of the vehicle 20 from the log data 31 acquired by the acquisition unit 401.

In step S902, the state information management unit 402 determines whether or not necessary information is present. For example, when the state information management unit 402 can extract information necessary for specifying or estimating the state of the vehicle 20 in step S901, the state information management unit 402 determines that necessary information is present. When necessary information is present, the state information management unit 402 moves the processing to step S903. Conversely, when necessary information is absent, for example, the state information management unit 402 ends the processing of FIG. 9.

In step S903, the state information management unit 402 extracts a vehicle identification number identifying the vehicle 20 from the log data 31 acquired by the acquisition unit 401.

In step S904, the state information management unit 402 specifies or estimates the state of the vehicle 20 based on the information extracted in step S901.

In step S905, for example, as illustrated in FIG. 7, the state information management unit 402 stores the state information 701 indicating the state of the vehicle 20 in the state information DB 411 or the like in association with the vehicle identification number.

Note that the processing of specifying or estimating the state of the vehicle illustrated in FIG. 9 is an example. The log data 31 is by no means a limitation. For example, in step S901, the state information management unit 402 may acquire information necessary for specifying or estimating the state of the vehicle 20 from an external vehicle management system or the like configured to manage the state of the vehicle 20.

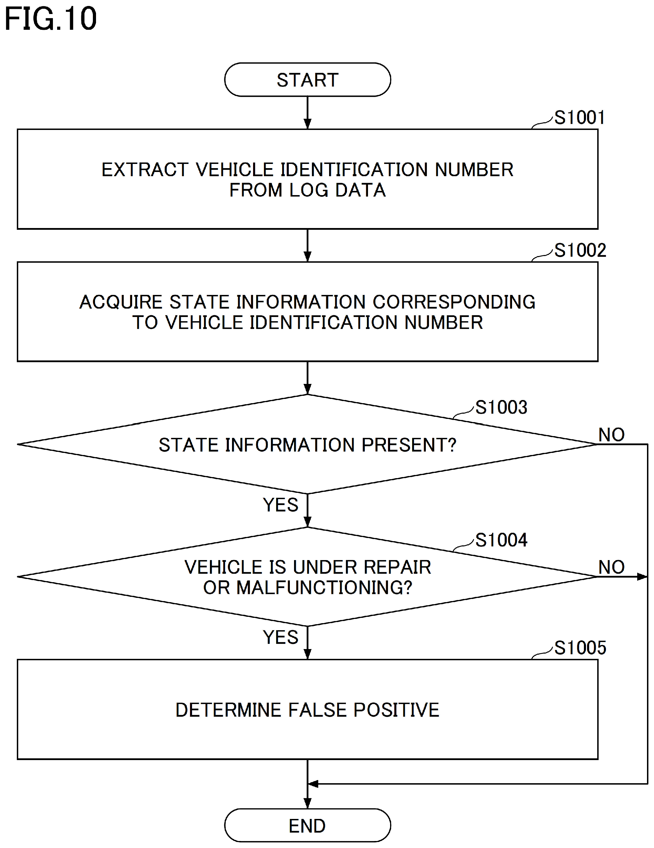

Here, with reference to FIG. 8, the description of the processing of the SOC server will be continued. In step S803, the determination unit 403 determines a false positive based on the state information indicating the state of the vehicle 20. As a specific example, the determination unit 403 executes determination processing illustrated in FIG. 10.

FIG. 10 is a flowchart illustrating an example of determination processing according to the first embodiment. This processing illustrates an example of processing executed by the determination unit 403 in step S803 of FIG. 8.

In step S1001, the determination unit 403 extracts a vehicle identification number from the log data 31 acquired by the acquisition unit 401. Note that the determination unit 403 may acquire the log data 31 acquired by the acquisition unit 401 from the state information management unit 402 or from the acquisition unit 401.

In step S1002, the determination unit 403 acquires state information corresponding to the extracted vehicle identification number. For example, the determination unit 403 acquires state information corresponding to the extracted vehicle identification number from the state information 701 illustrated in FIG. 7.

In step S1003, the determination unit 403 determines whether or not state information is present. For example, when the determination unit 403 can acquire state information of "MALFUNCTIONING" or "UNDER REPAIR" from the state information 701 illustrated in FIG. 7, the determination unit 403 determines that state information is present. When state information is present, the determination unit 403 moves the processing to step S1004. Conversely, when state information is absent, the determination unit 403 ends the processing of FIG. 10.

In step S1004, the determination unit 403 determines whether the vehicle 20 is "UNDER REPAIR" or "MALFUNCTIONING". When the vehicle 20 is "UNDER REPAIR" or "MALFUNCTIONING", the determination unit 403 moves the processing to step S1005. Conversely, when the vehicle 20 is neither "UNDER REPAIR" nor "MALFUNCTIONING", the determination unit 403 ends the processing of FIG. 10.

In step S1005, the determination unit 403 determines that the log data 31 acquired by the acquisition unit 401 is a false positive.

Note that "UNDER REPAIR" and "MALFUNCTIONING" are examples of the state information indicating the state of the vehicle 20. Further, the processing of steps S1003 to S1005 is an example of the determination method of determining whether or not the log data 31 is a false positive, based on the state information indicating the state of the vehicle 20. Examples of other state information and determination methods according to the present embodiment will be described below.

Here, with reference to FIG. 8, the description of the processing of the SOC server will be continued. In step S804, when a determination result obtained by the determination unit 403 is not a false positive, the SOC server 10 executes the processing of steps S805 and S806. Conversely, when a determination result obtained by the determination unit 403 is a false positive, the SOC server 10 ends the processing of FIG. 8 without executing the processing of steps S805 and S806.

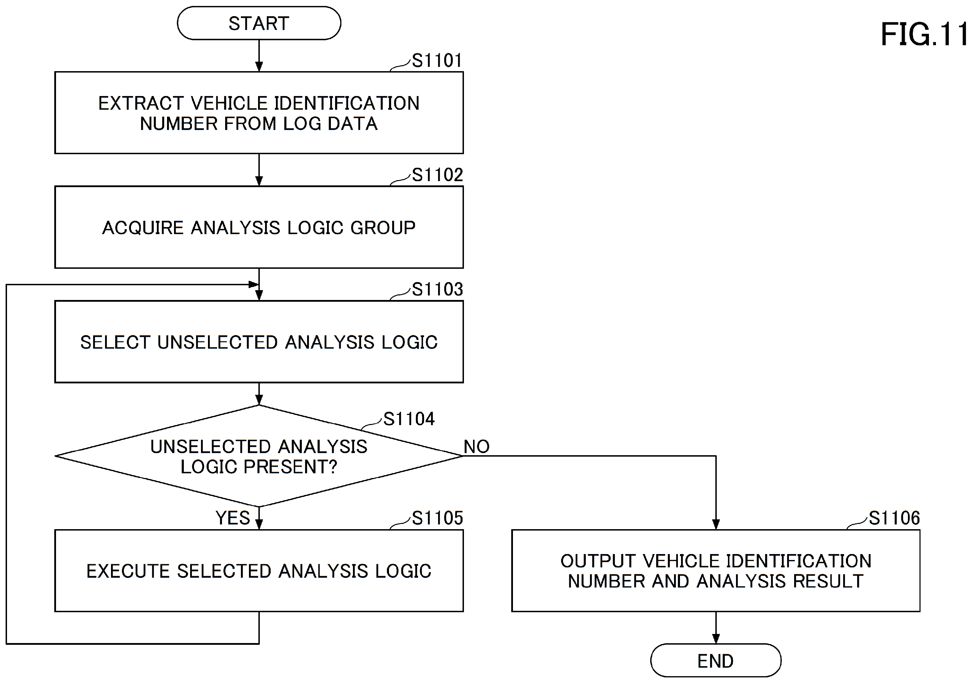

In step S805, the analysis unit 404 executes analysis processing of analyzing the log data 31 acquired by the acquisition unit 401. As a specific example, the analysis unit 404 executes analysis processing illustrated in FIG. 11.

FIG. 11 is a flowchart illustrating an example of analysis processing according to the first embodiment. This processing illustrates an example of processing executed by the analysis unit 404 in step S805 of FIG. 8.

In step S1101, the analysis unit 404 extracts a vehicle identification number from the log data 31 acquired by the acquisition unit 401.

In step S1102, the analysis unit 404 acquires, for example, an analysis logic group (a plurality of analysis logics 201) from the analysis logic DB 412 illustrated in FIG. 6.

In step S1103, the analysis unit 404 selects one unselected analysis logic from the acquired analysis logic group.

In step S1104, the analysis unit 404 determines whether or not an unselected analysis logic is present. For example, when the analysis unit 404 can select an unselected analysis logic in step S1103, the analysis unit 404 determines that an unselected analysis logic is present. When an unselected analysis logic is present, the analysis unit 404 moves the processing to step S1105. Conversely, when an unselected analysis logic is absent, the analysis unit 404 moves the processing to step S1106.

In step S1105, the analysis unit 404 executes the selected analysis logic on the log data 31, and returns the processing to step S1103. Through the processing of steps S1103 to S1105, the analysis unit 404 executes, for example, all analysis logics included in the acquired analysis logic group on the log data 31 acquired by the acquisition unit 401.

In step S1106, the analysis unit 404 outputs, to the output unit or the like, the vehicle identification number extracted from the log data 31 acquired by the acquisition unit 401 and the analysis result obtained through analysis in steps S1103 to S1105. This analysis result includes, for example, information (e.g., an attack ID) for identifying an attack detected by the analysis logic group.

Here, with reference to FIG. 8, the processing of the SOC server will be further described. In step S806, the output unit 405 outputs the analysis result obtained by the analysis unit 404 to a predetermined output destination. For example, the output unit 405 generates the report 202 including the information of the attack detected through the analysis processing 11 executed by the analysis unit 404 and the vehicle identification number of the vehicle 20 in which the attack was detected, and transmits the generated report 202 to the SIRT server 40 or the like. Note that the generation of the report 202 may be performed through the analysis processing 11 executed by the analysis unit 404, as described with reference to FIG. 2.

In this manner, the SOC server 10 according to the first embodiment can determine the log data 31 relating to the vehicle 20 as a false positive based on the state information indicating the state of the vehicle 20, thereby excluding the false positive log data from log data subject to the analysis processing 11.

### [Second Embodiment]

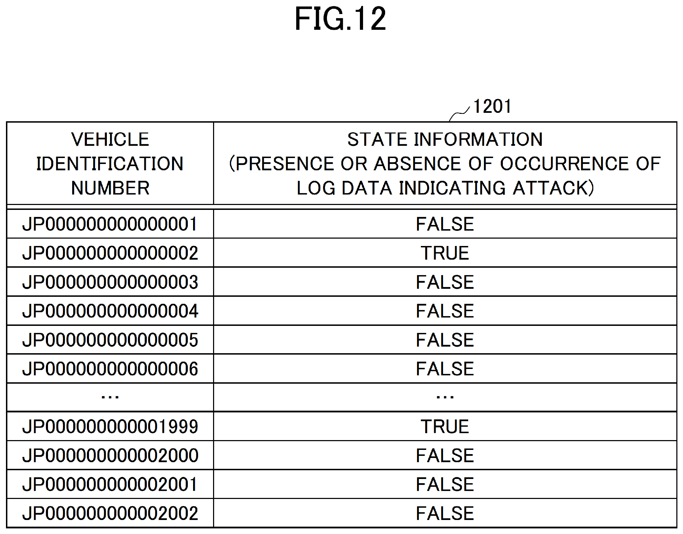

FIG. 12 is a diagram illustrating an image of an example of state information according to the second embodiment. As illustrated in FIG. 12, the state information management unit 402 according to the second embodiment manages, as state information 1201, information indicating the presence or absence of the occurrence of the log data 31 indicating an attack, in association with vehicle identification numbers of a plurality of vehicles 20.

In FIG. 12, "FALSE" of the state information 1201 indicates that the log data 31 strongly indicating an attack has not been detected in the vehicle 20 corresponding to the vehicle identification number. Conversely, "TRUE" of the state information 1201 indicates that the log data 31 strongly indicating an attack has been detected in the vehicle 20 corresponding to the vehicle identification number.

### <Flow of Processing>

Subsequently, a flow of processing of a vehicle security analysis method according to the second embodiment will be described. Note that the processing of the SOC server according to the second embodiment may be the same as the processing of the SOC server according to the first embodiment described with reference to FIG. 8. Also, the analysis processing according to the second embodiment may be the same as the analysis processing according to the first embodiment described with reference to FIG. 11.

### (Management Processing)

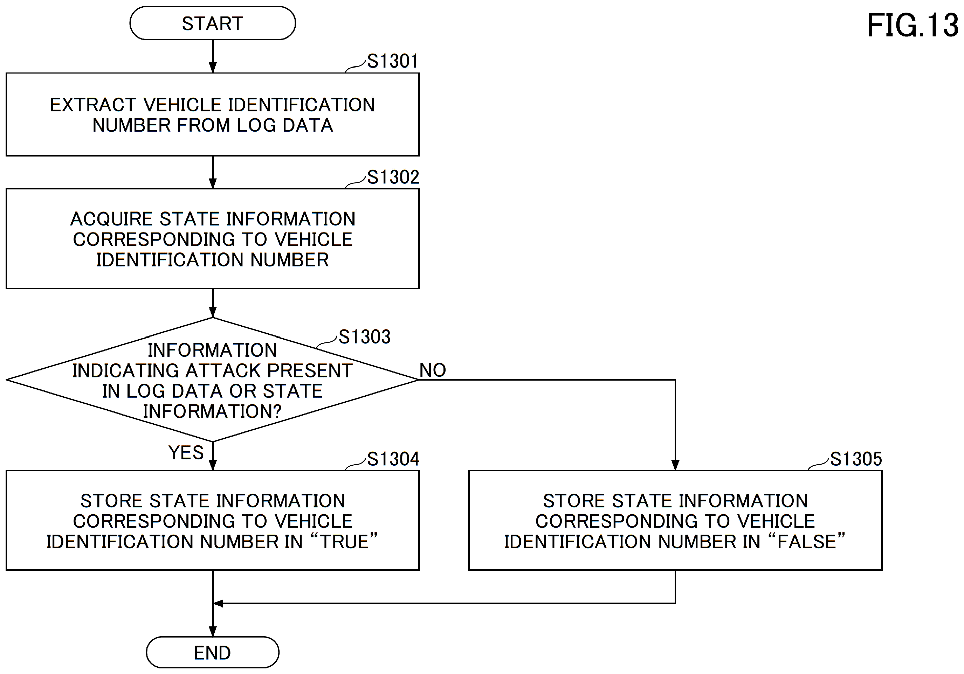

FIG. 13 is a flowchart illustrating an example of management processing of state information according to the second embodiment. This processing illustrates another example of processing executed by the state information management unit 402 in step S802 of FIG. 8.

In step S1301, the state information management unit 402 extracts a vehicle identification number from the log data 31 acquired by the acquisition unit 401.

In step S1302, the state information management unit 402 acquires state information corresponding to the extracted vehicle identification number. For example, the state information management unit 402 acquires state information corresponding to the extracted vehicle identification number from the state information 1201 illustrated in FIG. 12.

In step S1303, the state information management unit 402 determines whether or not the log data 31 acquired by the acquisition unit 401 or the acquired state information includes information indicating an attack (cyber attack) on the vehicle 20. For example, when the log data 31 acquired by the acquisition unit 401 includes information strongly indicating an attack on the vehicle 20 and/or when the acquired state information is "TRUE", the state information management unit 402 determines that information indicating an attack is present. Conversely, when the log data 31 acquired by the acquisition unit 401 does not include information strongly indicating an attack on the vehicle 20 and the acquired state information is "FALSE", the state information management unit 402 determines that information indicating an attack is absent.

When information indicating an attack is present, the state information management unit 402 moves the processing to step S1304. Conversely, when information indicating an attack is absent, the state information management unit 402 moves the processing to step S1305.

In step S1304, the state information management unit 402 stores "TRUE" in the state information corresponding to the vehicle identification number.

In step S1305, the state information management unit 402 stores "FALSE" in the state information corresponding to the vehicle identification number. Note that the state information management unit 402 may omit the processing of step S1305, and maintain the state information corresponding to the vehicle identification number of the vehicle 20.

Through the processing of FIG. 13, the state information management unit 402 can store and manage, for example, the state information 1201 illustrated in FIG. 12 in the state information DB 411 or the like.

### (Determination Processing)

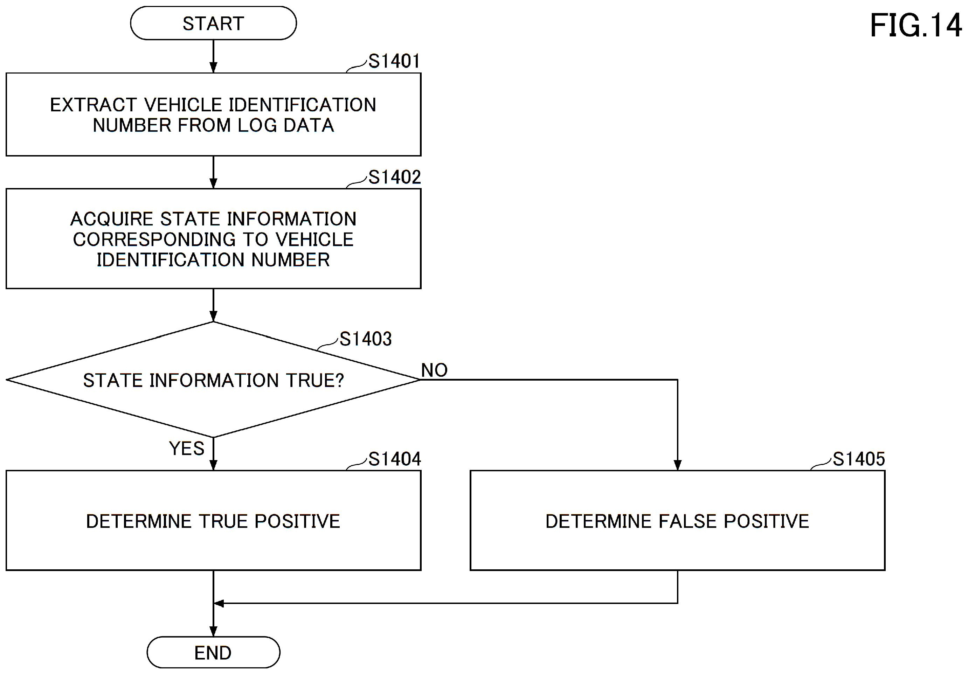

FIG. 14 is a flowchart illustrating an example of determination processing according to the second embodiment. This processing illustrates another example of the processing executed by the determination unit 403 in step S803 of FIG. 8.

In step S1401, the determination unit 403 extracts a vehicle identification number from the log data 31 acquired by the acquisition unit 401.

In step S1402, the determination unit 403 acquires state information corresponding to the extracted vehicle identification number. For example, the determination unit 403 acquires state information corresponding to the extracted vehicle identification number from the state information 1201 illustrated in FIG. 12.

In step S1403, the determination unit 403 determines whether or not the acquired state information is "TRUE". When the acquired state information is "TRUE", the determination unit 403 moves the processing to step S1404. Conversely, when the acquired state information is not "TRUE" (i.e., is "FALSE"), the determination unit 403 moves the processing to step S1405.

In step S1404, the determination unit 403 determines that the log data 31 acquired by the acquisition unit 401 is a true positive. In step S1405, the determination unit 403 determines that the log data 31 acquired by the acquisition unit 401 is a false positive. Note that the processing in step S1404 is optional, i.e., not essential.

In this manner, the SOC server 10 according to the second embodiment can determine that the log data 31 relating to the vehicle 20 is a false positive based on the state information indicating the state of the vehicle 20, and exclude the false positive log data from log data subject to the analysis processing 11.

### (Examples of Other State Information)

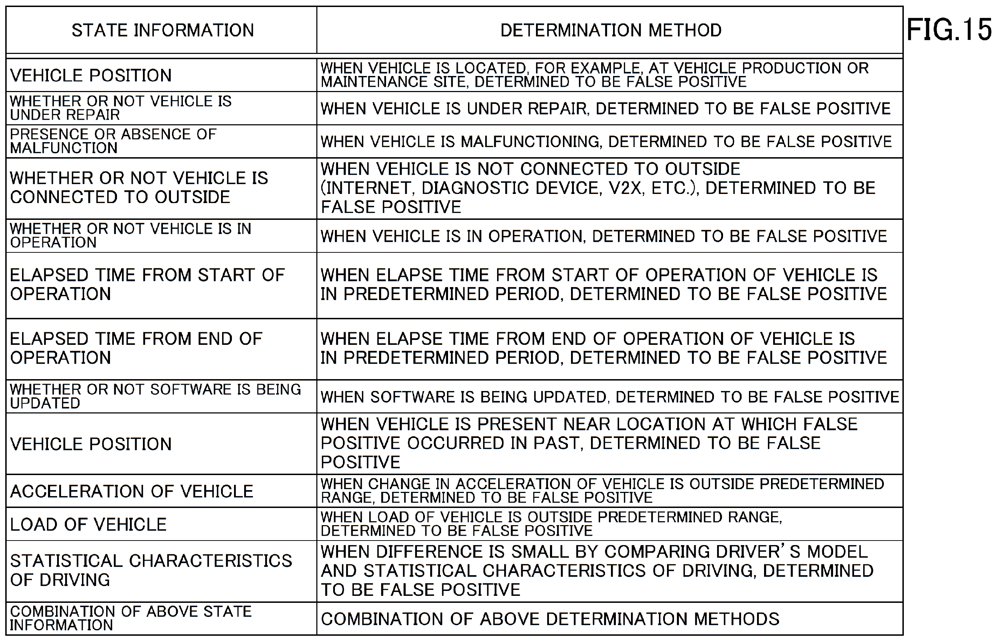

The state information described in the first and second embodiments is an example. For example, the vehicle security analysis system 1 may determine whether or not the log data 31 acquired by the acquisition unit 401 is a false positive using various other state information illustrated in FIG. 15.

FIG. 15 is a diagram illustrating another example of the state information and a determination method according to the present embodiment. As an example, the vehicle security analysis system 1 may use "VEHICLE POSITION" as the state information, as illustrated in FIG. 15. In this case, the state information management unit 402 may acquire position information indicating the position of the vehicle 20, for example, from an external vehicle management system configured to manage the state of the vehicle 20, or from the vehicle 20. Alternatively, the state information management unit 402 may acquire, from the log data 31, the position information indicating the position of the vehicle 20.

For example, when the vehicle 20 is located at a production site, a maintenance site, or the like for the vehicle 20, the determination unit 403 may determine that the log data 31 acquired by the acquisition unit 401 is a false positive. This is based on the assumption that a large number of false positives occur during production or maintenance.

Alternatively, the determination unit 403 may determine that the log data 31 acquired by the acquisition unit 401 is a false positive when the vehicle 20 is located near a location where a false positive occurred in the past. This is based on the assumption that a false positive occurs due to a specific status depending on a geographic position (road conditions, strong electric fields, electromagnetic interference, etc.).

As another example, the vehicle security analysis system 1 may use "WHETHER OR NOT VEHICLE IS UNDER REPAIR" as the state information, as illustrated in FIG. 15. In this case, the state information management unit 402 may acquire information indicating whether or not the vehicle 20 is under repair, for example, from an external vehicle management system configured to manage the state of the vehicle 20, or from the vehicle 20. Alternatively, the state information management unit 402 may acquire, from the log data 31, information indicating whether or not the vehicle 20 is under repair.

For example, when the vehicle 20 is under repair, the determination unit 403 may determine that the log data 31 acquired by the acquisition unit 401 is a false positive. This is based on the assumption that a large number of false positives occur during repair.

As another example, the vehicle security analysis system 1 may use "PRESENCE OR ABSENCE OF MALFUNCTION" as the state information, as illustrated in FIG. 15. In this case, the state information management unit 402 may acquire the presence or absence of malfunction of the vehicle 20, for example, from an external vehicle management system configured to manage the state of the vehicle 20, or from the vehicle 20. Alternatively, the state information management unit 402 may acquire, from the log data 31, the presence or absence of malfunction of the vehicle 20. In this case, when the vehicle 20 is malfunctioning, the determination unit 403 may determine that the log data 31 acquired by the acquisition unit 401 is a false positive. This is based on the assumption that a large number of false positives occur during malfunctioning.

As another example, the vehicle security analysis system 1 may use "WHETHER OR NOT VEHICLE IS CONNECTED TO OUTSIDE" as the state information, as illustrated in FIG. 15. In this case, the state information management unit 402 may acquire information indicating whether or not the vehicle 20 is connected to an external network (e.g., the Internet or V2X) or an external device (e.g., a diagnostic device), for example, from an external vehicle management system configured to manage the state of the vehicle 20, or from the vehicle 20. Alternatively, the state information management unit 402 may acquire, from the log data 31, information indicating whether or not the vehicle 20 is connected to the outside.

Note that V2X means "Vehicle to everything", and is a general term of techniques of mutual cooperation by performing communication between the vehicle 20 and other things (other vehicles, pedestrians, infrastructure, networks, etc.). In this case, when the vehicle 20 is not connected to the outside, the determination unit 403 may determine that the log data 31 acquired by the acquisition unit 401 is a false positive. This is based on the premise that attacks on the vehicle 20 are mainly threats from the outside, and other threats are acceptable.

As another example, the vehicle security analysis system 1 may use "WHETHER OR NOT VEHICLE IS IN OPERATION" as the state information, as illustrated in FIG. 15. In this case, the state information management unit 402 may acquire information indicating whether or not the vehicle 20 is in operation, for example, from an external vehicle management system configured to manage the state of the vehicle 20, or from the vehicle 20. Alternatively, the state information management unit 402 may acquire, from the log data 31, information indicating whether or not the vehicle 20 is in operation. In this case, when the vehicle 20 is in operation, the determination unit 403 determines that the log data 31 acquired by the acquisition unit 401 is a false positive. This is based on the assumption that a large number of false positives occur while the vehicle 20 is in operation.

As another example, the vehicle security analysis system 1 may use "ELAPSED TIME FROM START OF OPERATION" as the state information, as illustrated in FIG. 15. In this case, the determination unit 403 may determine that the log data 31 acquired by the acquisition unit 401 is a false positive within a predetermined period from the start of operation of the vehicle 20. This is based on the assumption that a false positive occurs because the state of the vehicle 20 is mechanically or electrically unstable immediately after the start of operation of the vehicle 20.

As another example, the vehicle security analysis system 1 may use "ELAPSED TIME FROM END OF OPERATION" as the state information, as illustrated in FIG. 15. In this case, the determination unit 403 may determine that the log data 31 acquired by the acquisition unit 401 is a false positive within a predetermined period from the end of operation of the vehicle 20. This is based on the assumption that a false positive occurs because the state of the vehicle 20 is mechanically or electrically unstable immediately after the end of operation of the vehicle 20.

As another example, the vehicle security analysis system 1 may use "WHETHER OR NOT SOFTWARE IS BEING UPDATED" as the state information, as illustrated in FIG. 15. In this case, the state information management unit 402 may acquire whether or not the vehicle 20 is undergoing a software update, for example, from an external vehicle management system configured to manage the state of the vehicle 20, or from the vehicle 20. Alternatively, the state information management unit 402 may acquire, from the log data 31, whether or not the vehicle 20 is undergoing a software update. In this case, when the vehicle 20 is undergoing a software update, the determination unit 403 may determine that the log data 31 acquired by the acquisition unit 401 is a false positive. This is based on the assumption that a false positive occurs because the state of the vehicle 20 is different from its normal state while the software is being updated.

As another example, the vehicle security analysis system 1 may use "ACCELERATION OF VEHICLE" as the state information, as illustrated in FIG. 15. In this case, when a change in the acceleration of the vehicle 20 is outside a predetermined range, the determination unit 403 may determine that the log data 31 acquired by the acquisition unit 401 is a false positive. This is based on the assumption that a false positive occurs because rapid acceleration or rapid deceleration of the vehicle 20 destabilizes the mechanical or electrical state of the vehicle 20.

As another example, the vehicle security analysis system 1 may use "LOAD OF VEHICLE" as the state information, as illustrated in FIG. 15. In this case, when the load of the vehicle 20 is outside a predetermined range, the determination unit 403 may determine that the log data 31 acquired by the acquisition unit 401 is a false positive. This is based on the assumption that a false positive occurs because overloading of the vehicle 20 destabilizes the mechanical or electrical state of the vehicle 20.

As another example, the vehicle security analysis system 1 may use "STATISTICAL CHARACTERISTICS OF DRIVING" as the state information, as illustrated in FIG. 15. In this case, the state information management unit 402 may acquire statistical characteristics of driving of the vehicle 20 from an external system or the like configured to manage the state or operation of the vehicle 20. In this case, when there is a small difference between a driver's model and the statistical characteristics of driving, the determination unit 403 may determine that the log data 31 acquired by the acquisition unit 401 is a false positive.

Also, the vehicle security analysis system 1 may determine whether or not the log data 31 acquired by the acquisition unit 401 is a false positive by combining a plurality of items of the above state information.

### [Third Embodiment]

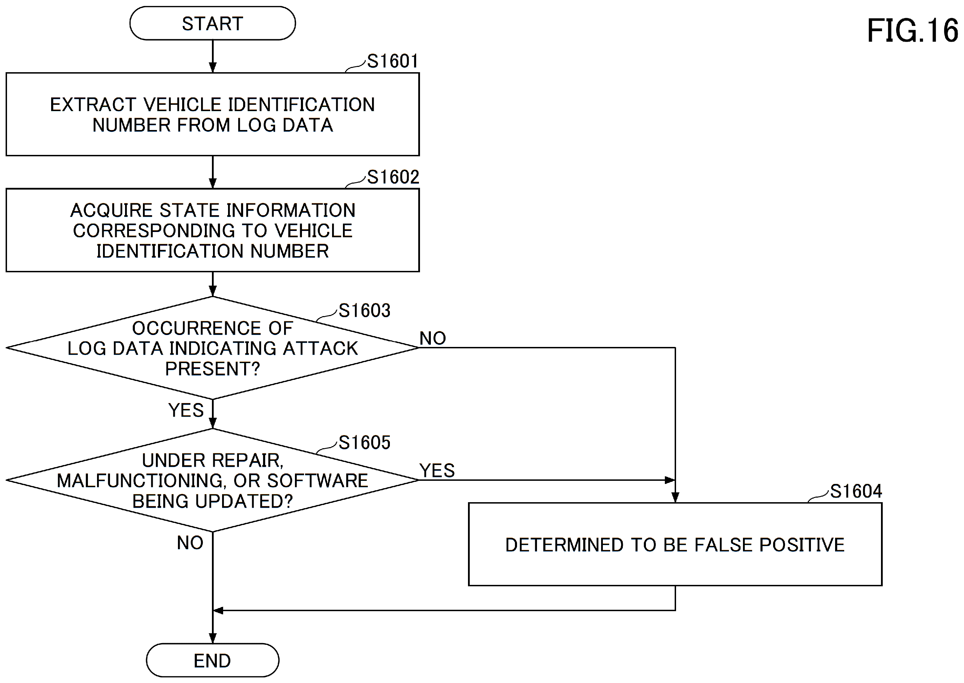

FIG. 16 is a flowchart illustrating an example of determination processing according to a third embodiment. This processing illustrates an example of the analysis processing when there are a plurality of items of the state information.

Note that processing of the SOC server according to the third embodiment may be the same as the processing of the SOC server according to the first embodiment described with reference to FIG. 8. Also, analysis processing according to the third embodiment may be the same as the analysis processing according to the first embodiment described with reference to FIG. 11. Further, it is assumed that the state information management unit 402 manages four items of the state information, i.e., "PRESENCE OR ABSENCE OF OCCURRENCE OF LOG DATA INDICATING ATTACK", "WHETHER OR NOT VEHICLE IS UNDER REPAIR", "PRESENCE OR ABSENCE OF MALFUNCTION", and "WHETHER OR NOT SOFTWARE IS BEING UPDATED".

In step S1601, the determination unit 403 extracts a vehicle identification number from the log data 31 acquired by the acquisition unit 401.

In step S1602, the determination unit 403 acquires state information corresponding to the extracted vehicle identification number. For example, the determination unit 403 acquires the above four items of the state information.

In step S1603, the determination unit 403 determines whether or not occurrence of log data indicating an attack is present. For example, when the state information indicating "PRESENCE OR ABSENCE OF OCCURRENCE OF LOG DATA INDICATING ATTACK" illustrated in FIG. 12 is "TRUE", the determination unit 403 determines that occurrence of log data indicating an attack is present.

When occurrence of log data indicating an attack is present, the determination unit 403 moves the processing to step S1604. Conversely, when occurrence of log data indicating an attack is absent, the determination unit 403 moves the processing to step S1605.

In step S1604, the determination unit 403 determines that the log data 31 acquired by the acquisition unit 401 is a false positive.

In step S1605, the determination unit 403 determines, based on the acquired state information, whether the vehicle 20 is under repair, malfunctioning, or undergoing a software update. When the vehicle 20 is under repair, malfunctioning, or undergoing a software update, the determination unit 403 moves the processing to step S1604. Conversely, when the vehicle 20 is not under repair, malfunctioning, and undergoing a software update, the determination unit 403 ends the processing of FIG. 16.

In this manner, the determination unit 403 may determine whether or not the log data 31 acquired by the acquisition unit 401 is a false positive by combining a plurality of items of the state information.

As described above, according to the present embodiment, in a vehicle security analysis system configured to acquire and analyze sensor log data relating to an in-vehicle device mounted on a vehicle, it is possible to determine that erroneously detected sensor log data is an erroneous detection.

### <Summary of Embodiments>

The present specification discloses, at least, a vehicle security analysis system, a vehicle security analysis method, and a program, which are described in the following clauses.
(Clause 1) A vehicle security analysis system, including:
   an acquisition unit configured to acquire sensor log data relating to an in-vehicle device mounted on a vehicle;
   a determination unit configured to, based on state information indicating a state of the vehicle, determine whether or not the sensor log data acquired by the acquisition unit is sensor log data having occurred based on an event not caused by a cyber attack;
   an analysis unit configured to analyze the sensor log data acquired by the acquisition unit while excluding the sensor log data having occurred based on the event not caused by the cyber attack; and
   an output unit configured to output an analysis result obtained by the analysis unit.
(Clause 2) The vehicle security analysis system according to clause 1, further including:
   a state information management unit configured to specify or estimate the state of the vehicle based on the sensor log data acquired by the acquisition unit.
(Clause 3) The vehicle security analysis system according to clause 1, further including:
   a state information management unit configured to acquire information of the vehicle from the vehicle or an external server and manage the state information based on the information of the vehicle.
(Clause 4) The vehicle security analysis system according to any one of clauses 1 to 3, wherein
   the determination unit determines that the sensor log data having occurred based on the event not caused by the cyber attack is a false positive.
(Clause 5) The vehicle security analysis system according to any one of clauses 1 to 4, wherein
   the state information includes information indicating whether or not the sensor log data indicating occurrence of the cyber attack in the vehicle has occurred, and
   in a case in which the sensor log data indicating the occurrence of the cyber attack in the vehicle has not occurred, the determination unit determines that the sensor log data acquired by the acquisition unit is the sensor log data having occurred based on the event not caused by the cyber attack.
(Clause 6) The vehicle security analysis system according to any one of clauses 1 to 5, wherein
   the state information includes information indicating that the vehicle is under repair, malfunctioning, or undergoing a software update, and
   in a case in which the vehicle is under repair, malfunctioning, or undergoing the software update, the determination unit determines that the sensor log data acquired by the acquisition unit is the sensor log data having occurred based on the event not caused by the cyber attack.
(Clause 7) The vehicle security analysis system according to any one of clauses 1 to 6, wherein
   the state information includes information indicating whether or not the vehicle is connected to an external network or an external device, and
   in a case in which the vehicle is not connected to the external network or the external device, the determination unit determines that the sensor log data acquired by the acquisition unit is the sensor log data having occurred based on the event not caused by the cyber attack.
(Clause 8) The vehicle security analysis system according to any one of clauses 1 to 7, wherein
   the state information includes information indicating a position of the vehicle, and
   in a case in which the position of the vehicle is at a production site or a maintenance site for the vehicle, or the position of the vehicle is near a location where a false positive occurred, the determination unit determines that the sensor log data acquired by the acquisition unit is the sensor log data having occurred based on the event not caused by the cyber attack.
(Clause 9) A vehicle security analysis method executed by a computer, the vehicle security analysis method including:
   acquisition processing of acquiring sensor log data relating to an in-vehicle device mounted on a vehicle;
   determination processing of determining, based on state information indicating a state of the vehicle, whether or not the sensor log data acquired through the acquisition processing is sensor log data having occurred based on an event not caused by a cyber attack;
   analysis processing of analyzing the sensor log data acquired through the acquisition processing while excluding the sensor log data having occurred based on the event not caused by the cyber attack; and
   output processing of outputting an analysis result obtained through the analysis processing.
(Clause 10) A program causing a computer to execute:
   acquisition processing of acquiring sensor log data relating to an in-vehicle device mounted on a vehicle;
   determination processing of determining, based on state information indicating a state of the vehicle, whether or not the sensor log data acquired through the acquisition processing is sensor log data having occurred based on an event not caused by a cyber attack;
   analysis processing of analyzing the sensor log data acquired through the acquisition processing while excluding the sensor log data having occurred based on the event not caused by the cyber attack; and
   output processing of outputting an analysis result obtained through the analysis processing.

Although the embodiments of the present invention have been described above in detail, various modifications and applications of the present invention are possible within the scope of the claims.

This application claims priority to Basic Application No. 2023-186504, filed with the Japan Patent Office on October 31, 2023, the entire contents of which are hereby incorporated by reference.

### REFERENCE SIGNS LIST

- 1: Vehicle security analysis system
- 10: SOC server (vehicle security analysis device)
- 20: Vehicle
- 21,21a,21b: In-vehicle device
- 31: Log data (sensor log data)
- 300: Computer
- 401: Acquisition unit
- 402: State information management unit
- 403: Determination unit
- 404: Analysis unit
- 405: Output unit
- 411: State information DB
- 412: Analysis logic DB
- 701,1201: State information

## Claims

1. A vehicle security analysis system, comprising:
an acquisition unit configured to acquire sensor log data relating to an in-vehicle device mounted on a vehicle;
a determination unit configured to, based on state information indicating a state of the vehicle, determine whether or not the sensor log data acquired by the acquisition unit is sensor log data having occurred based on an event not caused by a cyber attack;
an analysis unit configured to analyze the sensor log data acquired by the acquisition unit while excluding the sensor log data having occurred based on the event not caused by the cyber attack; and
an output unit configured to output an analysis result obtained by the analysis unit.

2. The vehicle security analysis system according to claim 1, further comprising:
a state information management unit configured to specify or estimate the state of the vehicle based on the sensor log data acquired by the acquisition unit.

3. The vehicle security analysis system according to claim 1, further comprising:
a state information management unit configured to acquire information of the vehicle from the vehicle or an external server and manage the state information based on the information of the vehicle.

4. The vehicle security analysis system according to claim 1, wherein
the determination unit is further configured to determine that the sensor log data having occurred based on the event not caused by the cyber attack is a false positive.

5. The vehicle security analysis system according to any one of claims 1 to 4, wherein
the state information includes information indicating whether or not the sensor log data indicating occurrence of the cyber attack in the vehicle has occurred, and
in a case in which the sensor log data indicating the occurrence of the cyber attack in the vehicle has not occurred, the determination unit determines that the sensor log data acquired by the acquisition unit is the sensor log data having occurred based on the event not caused by the cyber attack.

6. The vehicle security analysis system according to any one of claims 1 to 4, wherein
the state information includes information indicating that the vehicle is under repair, malfunctioning, or undergoing a software update, and
in a case in which the vehicle is under repair, malfunctioning, or undergoing the software update, the determination unit determines that the sensor log data acquired by the acquisition unit is the sensor log data having occurred based on the event not caused by the cyber attack.

7. The vehicle security analysis system according to any one of claims 1 to 4, wherein
the state information includes information indicating whether or not the vehicle is connected to an external network or an external device, and
in a case in which the vehicle is not connected to the external network or the external device, the determination unit determines that the sensor log data acquired by the acquisition unit is the sensor log data having occurred based on the event not caused by the cyber attack.

8. The vehicle security analysis system according to any one of claims 1 to 4, wherein
the state information includes information indicating a position of the vehicle, and
in a case in which the position of the vehicle is at a production site or a maintenance site for the vehicle, or the position of the vehicle is near a location where a false positive occurred, the determination unit determines that the sensor log data acquired by the acquisition unit is the sensor log data having occurred based on the event not caused by the cyber attack.

9. A vehicle security analysis method executed by a computer, the vehicle security analysis method comprising:
acquisition processing of acquiring sensor log data relating to an in-vehicle device mounted on a vehicle;
determination processing of determining, based on state information indicating a state of the vehicle, whether or not the sensor log data acquired through the acquisition processing is sensor log data having occurred based on an event not caused by a cyber attack;
analysis processing of analyzing the sensor log data acquired through the acquisition processing while excluding the sensor log data having occurred based on the event not caused by the cyber attack; and
output processing of outputting an analysis result obtained through the analysis processing.

10. A program causing a computer to execute:
acquisition processing of acquiring sensor log data relating to an in-vehicle device mounted on a vehicle;
determination processing of determining, based on state information indicating a state of the vehicle, whether or not the sensor log data acquired through the acquisition processing is sensor log data having occurred based on an event not caused by a cyber attack;
analysis processing of analyzing the sensor log data acquired through the acquisition processing while excluding the sensor log data having occurred based on the event not caused by the cyber attack; and
output processing of outputting an analysis result obtained through the analysis processing.
